# EUROPÄISCHE PATENTANMELDUNG

(11) **EP 3 738 821 A1**
(43) Veröffentlichungstag der Anmeldung: **18.11.2020**
(21) Anmeldenummer: 20168432.1
(22) Anmeldetag: 07.04.2020
(51) Int. Cl.: B60N 2/30, B60N 2/24

(54) **HALTERUNG UND KFZ**

(30) Priorität: 15.05.2019 DE 202019102737 U
(71) Anmelder: API CZ s.r.o., 391 76 Slapy (CZ)
(72) Erfinder: Bartos, Miroslav, 39001 Tabor (CZ); Huisl, Marek, 39165 Bechyne (CZ)
(74) Vertreter: Schmid, Nils T.F.

(57) **Zusammenfassung**

Die vorliegende Erfindung betrifft eine Halterung zum Montieren eines Sitzes, insbesondere eines sechsten oder siebten Sitzes, in einem rückseitigen Laderaum mit einem wannenartigen Laderaumboden, dessen seitliche Wannenränder in einen gemeinsamen Wannengrund münden, auf dem ein Rollstuhl in dem Laderaum verstaubar ist, eines behindertengerechten PKW oder Nutzfahrzeugs, umfassend eine Befestigungseinrichtung zum lösbaren Befestigen des Sitzes an der Halterung und eine an einem Wannenrand zu befestigende Basis, wobei die Halterung dazu eingerichtet ist, eine aufrechte, insbesondere vertikale, Verstauposition, in der ein Rollstuhl in dem Laderaum unterbringbar ist, und eine geneigte, insbesondere horizontale, Sitzposition einzunehmen, in der der Sitz an der Halterung befestigbar ist.

## Beschreibung

Die vorliegende Erfindung betrifft eine Halterung zum Anbringen eines Sitzes, insbesondere eines sechsten oder siebten Sitzes, in einem rückseitigen Laderaum mit einem wannenartigen Wannenraumboden, dessen seitlichen Wannenränder in einen gemeinsamen Wannengrund münden, auf dem ein Rollstuhl in dem Laderaum verstaubar ist, eines behindertengerechten PKW oder Nutzfahrzeugs. Des Weiteren betrifft die vorliegende Erfindung ein KFZ, insbesondere einen behindertengerechten PKW oder ein Nutzfahrzeug.

Der rückseitige Laderaum eines behindertengerechten Kraftfahrzeugs oder Nutzfahrzeugs, insbesondere eines PKW, wie eines Kompaktwagens oder Geländewagens, ist im Vergleich zu den OEM-Standardvarianten umgebaut, um das Einfahren und Verstauen beispielsweise eines Rollstuhls zu ermöglichen. Ein derartiger Laderaumboden umfasst einen nach unten versetzten Wannengrund, der seitlich jeweils in einen sich im Wesentlichen von dem Wannengrund vertikal nach oben und in Fahrzeuglängsrichtung erstreckenden Wannenrand mündet. Dadurch ist zusätzlicher Laderaum, insbesondere in Vertikalrichtung, geschaffen, um beispielsweise einen Rollstuhl inklusive Rollstuhlfahrer im Laderaum zu befördern.

Der derartige Umbau des Laderaums hat zur Folge, dass die OEM-seitigen Sitze, insbesondere die sechsten und siebten Sitze, nicht mehr verwendbar sind. Daher sind bislang Einzelanfertigungen für Sitze notwendig, um diese in dem umgebauten Laderaum eines behindertengerechten PKW befestigen bzw. anbringen zu können. Einzelanfertigungen sind allerdings sehr kostenintensiv.

Eine Aufgabe der vorliegenden Erfindung besteht darin, die Nachteile des Standes der Technik zu verbessern, insbesondere eine Halterung zum Anbringen eines Sitzes in einem rückseitigen Laderaum eines behindertengerechten PKW bereitzustellen, die kostengünstig ist und/oder eine Anbringung der OEM-seitigen Sitze ermöglicht.

Die Aufgabe wird durch den Gegenstand von Anspruch 1 bzw. 14 gelöst.

Bevorzugte Ausführungen sind in den Unteransprüchen gegeben.

Gemäß einem Aspekt der vorliegenden Erfindung ist eine Halterung zum Montieren und/oder Aufnehmen bzw. Unterbringen eines Sitzes, insbesondere eines sechsten und/oder siebten Sitzes in einem Rückseitigen Laderaum eines behindertengerechten Kraftfahrzeugs (KFZ), wie eines Pkw oder eines Nutzfahrzeugs, bereitgestellt. Wenn in dieser Beschreibung von Fahrzeuglängsrichtung gesprochen wird, ist im Allgemeinen die Erstreckungsrichtung zwischen Fahrzeugheck, das entgegen der Fahrtrichtung nach hinten weist, und Fahrzeugfront, die in Fahrtrichtung nach vorne weist, gemeint. Ausdrücke wie "rückseitige" oder "hintere" bedeuten damit im Wesentlichen, dass das jeweilige Bauteil in Richtung des Fahrzeughecks bzw. fahrzeugheckseitig orientiert und/oder angeordnet ist. Ausdrücke wie "vorderseitige" oder "vordere" bedeuten im Wesentlichen, dass das jeweilige Bauteil in Richtung der Fahrzeugfront bzw. fahrzeugfrontseitig orientiert und/oder angeordnet ist. Insbesondere kommt die erfindungsgemäße Halterung zum Einsatz bei Kraftfahrzeugen, mit denen Rollstuhlfahrer transportiert werden können, insbesondere bei denen ein Rollstuhl und/oder ein Rollstuhl samt Insasse vorzugsweise mittels einer Rampe in den Laderaum einfahren bzw. eingeschoben werden kann, um dort während der Fahrt verstaut und vorzugsweise gesichert werden zu können. Der Laderaum weist beispielsweise einen wannenartigen Laderaumboden auf, dessen seitliche Wannenränder in einen gemeinsamen Wannengrund münden, auf dem der Rollstuhl in dem Laderaum verstaubar ist und der vorzugsweise bezüglich der Wannenränder nach unten, das heißt in Vertikalrichtung, herabgesetzt ist. Insbesondere kann ein Rollstuhl vorzugsweise samt Insasse in dem Laderaum auf dem Wannengrund während der Fahrt verstaubar und/oder der Laderaum mittels einer Rampe von außen durch den Rollstuhl vorzugsweise samt Insasse befahrbar sein.

Die Halterung 1 umfasst eine Befestigungseinrichtung zum lösbaren Befestigen des Sitzes, vorzugsweise des sechsten und/oder siebten Sitzes, an der Halterung. Vorteilhafterweise ist die Befestigungseinrichtung derart gestaltet, dass die Originalsitze des Kraftfahrzeugherstellers, insbesondere die OEM-Sitze, an der Halterung befestigt werden können. Dies bringt den Vorteil, dass weder der Laderaum des vorzugsweise behindertengerechten KFZ konstruktiv abgeändert werden muss, noch Extraanfertigungen für rückseitige Sitze, wie sechste und/oder siebte Sitze, konstruiert und erworben werden müssen, um eine zusätzliche Sitzposition in dem Laderaum des behindertengerechten KFZ zu ermöglichen. Es sei klar, dass eine zusätzliche Sitzposition insbesondere dann gewünscht ist, wenn der Laderaum nicht belegt ist, insbesondere der rückseitige behindertengerechte Laderaum nicht von einem Rollstuhl und/oder Rollstuhl samt Insasse belegt ist. Des Weiteren kann die Befestigungseinrichtung vorteilhafterweise derart gestaltet sein, dass der OEM-seitige Befestigungsmechanismus der OEM-Sitze, insbesondere des sechsten und/oder siebten Sitzes, verwendet werden kann, um den Sitz lösbar zu befestigen und wieder zu demontieren.

Die Halterung umfasst außerdem eine an einem Wannenrand zu befestigende Basis. Die Basis, die beispielsweise als im Wesentlichen ebene Platte, vorzugsweise aus Metall oder Kunststoff, gebildet ist, kann beispielsweise mit dem Wannenrand verschraubt sein. In einer beispielhaften Ausführung ist die Basis an einer im Wesentlichen horizontalen und sich in Fahrzeuglängsrichtung erstreckenden Auflagefläche des Wannenrands befestigt, die an eine sich im Wesentlichen nach oben, insbesondere in Vertikalrichtung, von dem Wannengrund aus erstreckende Seitenwand des Laderaums anschließt.

Erfindungsgemäß ist die Halterung dazu eingerichtet, eine aufrechte, insbesondere vertikale, Verstauposition einzunehmen, in der ein Rollstuhl in dem Laderaum unterbringbar ist. In der Verstauposition ist die Halterung vorzugsweise derart angeordnet, dass kein Sitz an der Halterung befestigbar ist, sondern vorzugsweise die Halterung derart in dem Laderaum angeordnet und/oder orientiert ist, dass diese im Wesentlichen vollständig von der Halterung freigegeben ist, sodass der Laderaum, insbesondere der durch den Wannengrund definierte Laderaum, freigegeben ist, um beispielsweise einen Rollstuhl samt Insasse in dem Laderaum unterzubringen. Die Halterung ist ferner dazu eingerichtet, eine geneigte, insbesondere horizontale, Sitzposition einzunehmen, in der der Sitz an der Halterung befestigbar ist. Beispielsweise wird die Halterung zunächst in die Sitzposition gebracht, bevor der Sitz an der Halterung befestigt wird, um eine zusätzliche Sitzposition in dem Laderaum, insbesondere eine sechste und/oder siebte Sitzposition, bereitzustellen. Mittels der erfindungsgemäßen Halterung ist es möglich, die standardmäßigen, OEM-seitigen Originalsitze anzubringen, um im Laderaum einen Sitz, insbesondere den sechsten und/oder siebten Sitz, montieren zu können. Dadurch können Kosten für aufwendige konstruktive Umgestaltungen des Laderaums und/oder Einzelanfertigungen von Sitzen vermieden werden. Durch die einfache Befestigung der Halterung an dem seitlichen Wannenrand ist eine platzsparende Anordnung der Halterung gegeben, sowie eine einfache Montage des Sitzes und ein einfaches Wechseln zwischen Sitzposition und Verstauposition der Halterung gewährleistet.

In einer beispielhaften Ausführung der vorliegenden Erfindung ist ein Boden schwenkbar an die Basis gekoppelt. Der Boden kann beispielsweise als im Wesentlichen ebene Platte, vorzugsweise aus Metall oder Kunststoff, gebildet sein und/oder eine rechteckige, insbesondere quadratische, Struktur besitzen. Des Weiteren kann der Boden die Befestigungseinrichtung zum lösbaren Befestigen des Sitzes umfassen. Der Boden kann derart dimensioniert und/oder derart an die Basis gekoppelt sein, dass sich der Boden in der Sitzposition der Halterung brückenartig wenigstens teilweise über den Wannengrund erstreckt. Beispielsweise kann sich der Boden vollständig brückenartig über den Wannengrund erstrecken, insbesondere bis zu dem gegenüberliegenden Wannenrand, an dem die Basis der Halterung nicht befestigt ist. Die Halterung kann auch eine weitere Basis aufweisen, die an dem anderen Wannenrand befestigt ist, sodass je eine Basis an einem der gegenüberliegenden Wannenränder befestigt ist und sich der Boden vollständig brückenartig über den Wannengrund erstreckt. Bei dieser Ausführung kann die Halterung einen sechsten und einen siebten Sitz aufnehmen, um zwei zusätzliche Sitzpositionen im Laderaum bereitzustellen. Alternativ können zwei erfindungsgemäße Halterungen in dem Laderaum angeordnet sein und/oder im Wesentlichen auf gleicher Axialhöhe in Bezug auf die Fahrzeuglängsrichtung positioniert und an je einem der gegenüberliegenden Wannenränder befestigt sein, um zwei zusätzliche Sitzpositionen im Laderaum bereitzustellen.

Gemäß einer beispielhaften Weiterbildung der erfindungsgemäßen Halterung ist der Boden derart schwenkbar an die Basis gekoppelt, dass der Boden sich in der Verstauposition der Halterung im Wesentlichen nach oben, insbesondere senkrecht zu einer Basisgrundfläche, erstreckt und in der Sitzposition der Halterung sich der Boden seitlich von der Basis weg, insbesondere im Wesentlichen parallel zu der Basisgrundfläche, erstreckt. Beispielsweise kann die Basisgrundfläche im Wesentlichen horizontal orientiert sein und sich im Wesentlichen in Fahrzeuglängsrichtung erstrecken. Die Basisgrundfläche kann beispielsweise in zwei Hauptabschnitte unterteilt werden: ein Befestigungsabschnitt zum Befestigen der Halterung an dem Wannenrand; und ein Kopplungsabschnitt zum Koppeln der Basis mit dem Boden.

In einer weiteren beispielhaften Ausführung der vorliegenden Erfindung umfasst die Halterung eine insbesondere manuell zu betätigende Feststell- und Freigabeeinrichtung. Die Feststell- und Freigabeeinrichtung kann auch beispielsweise über eine Fahrzeugelektronik betätigbar und/oder ansteuerbar sein. Die Feststell- und Freigabeeinrichtung ist zwischen einem Sperrzustand, in dem die Halterung gegen eine Verlagerung fixiert ist, und einem Freigabezustand verbringbar, in dem die Halterung zwischen der Verstau- und der Sitzposition verlagerbar, insbesondere verschwenkbar, ist. Die Feststell- und Freigabeeinrichtung kann derart ausgestaltet sein, dass sie sowohl in der Verstau- als auch in der Sitzposition der Halterung den Sperrzustand einnehmen kann. In dem Sperrzustand kann die Halterung derart fixiert sein, dass sie weder aus der Verstauposition noch aus der Sitzposition verlagert werden kann, insbesondere in die andere Position aus Verstau- bzw. Sitzposition verbracht werden kann. Dadurch ist ein zuverlässiges Halten der jeweiligen Endpositionen, das heißt der Verstauposition bzw. der Sitzposition, sichergestellt, sowie ein zuverlässiges Verlagern zwischen den Endpositionen bei Bedarf ermöglicht.

Gemäß einer weiteren beispielhaften Weiterbildung der erfindungsgemäßen Halterung fixiert die Feststell- und Freigabeeinrichtung in dem Sperrzustand den Boden relativ zu der Basis gegen ein Verschwenken. Der schwenkbar an die Basis gekoppelte Boden kann folglich in dem Sperrzustand der Feststell- und Freigabeeinrichtung nicht bezüglich der Basis verschwenkt werden, insbesondere um zwischen der im Wesentlichen nach oben orientierten Verstauposition und der im Wesentlichen seitlich orientierten Sitzposition verschwenkt werden zu können. In dem Freigabezustand lässt die Feststell- und Freigabeeinrichtung eine Schwenkbewegung des Bodens relativ zu der Basis zu. Beispielsweise kann die Basis in dem Freigabezustand der Feststell- und Freigabeeinrichtung zwischen beliebigen Winkelpositionen zwischen der im Wesentlichen vertikalen Verstauposition und der im Wesentlichen horizontalen Sitzposition verschwenkt werden.

Gemäß einer beispielhaften Ausführung der vorliegenden Erfindung ist eine Schwenkachse, um die der Boden relativ zu der Basis zwischen der Verstau- und der Sitzposition verschwenkbar ist, bezüglich der Feststell- und Freigabeeinrichtung, insbesondere bezüglich einer Betätigungsrichtung der Feststell- und Freigabeeinrichtung, versetzt. Mit anderen Worten schwenkt die Feststell- und Freigabeeinrichtung während einer Schwenkbewegung der Halterung, insbesondere einer relativen Schwenkbewegung des Bodens relativ zu der Basis, um die Schwenkachse, insbesondere folgt die Feststell- und Freigabeeinrichtung einer Schwenkbewegung der Halterung. Beispielsweise ist die Schwenkachse im Wesentlichen in Fahrzeuglängsrichtung orientiert und/oder an einem wannenrandseitigen Ende der Halterung angeordnet. Beispielsweise ist das wannenrandseitige Ende der Halterung durch den Boden gebildet und/oder befindet sich im Wesentlichen im Bereich, vorzugsweise oberhalb, der Basis. Beispielseise ist der Boden wannenrandseitig mittels einer den Boden an der Basis befestigenden Kopplungseinrichtung, vorzugsweise ein Längsbolzen, gehalten und/oder um diese(n) verschwenkbar. Beispielsweise besitzt die Halterung im Bereich der Schwenkachse, insbesondere im Bereich der Kopplungseinrichtung, einander gegenüberliegende und/oder einander zugewandte und/oder wenigstens teilweise aufeinanderliegende Führungsflächen von Basis und Boden. Die entsprechenden Führungsflächen von Basis und Boden sind beispielsweise im Wesentlichen quer, vorzugsweise senkrecht, zur Fahrzeuglängsrichtung und/oder im Wesentlichen vertikal orientiert.

In einer weiteren beispielhaften Ausführung der vorliegenden Erfindung weist die Feststell- und Freigabeeinrichtung einen Rastmechanismus auf, der die Feststell- und Freigabeeinrichtung in dem Sperrzustand festhält. Das Festhalten kann beispielsweise durch formschlüssiges und/oder kraftschlüssiges Einrasten vorzugsweise mit einem entsprechenden Rastpartner realisiert sein. Die Verrastung des Rastmechanismus in dem Sperrzustand kann derart realisiert sein, dass ohne erneute Betätigung der Feststell- und Freigabeeinrichtung diese in dem Sperrzustand verbleibt und somit die Halterung gegen eine Verlagerung fixiert, insbesondere in der Verstau- oder der Sitzposition fixiert. Gemäß einer beispielhaften Weiterbildung der vorliegenden Erfindung ist der Rastmechanismus derart ausgelegt, dass die Feststell- und Freigabeeinrichtung beim Einnehmen der Verstau- und der Sitzposition durch die Halterung automatisch in den Sperrzustand übergeht und/oder wechselt. Dadurch ist eine besonders einfache Handhabung der erfindungsgemäßen Halterung ermöglicht. Des Weiteren wird gewährleistet, dass die Halterung nicht ungewollt zurück, beispielsweise aus der Verstauposition in die Sitzposition, fällt, wenn der Benutzer beispielsweise nicht manuell sichergestellt hat, dass die Feststell- und Freigabeeinrichtung sich in dem Sperrzustand befindet, bevor er die Halterung freigibt bzw. loslässt.

Gemäß einer beispielhaften Weiterbildung der erfindungsgemäßen Halterung umfasst der Rastmechanismus wenigstens ein Rastelement, wie einen Vorsprung und/oder eine Vertiefung, das einen Verrastungseingriff bilden kann, um den Sperrzustand zu fixieren. Ferner kann die Halterung, insbesondere die Basis, an einer rückseitigen Seitenfläche wenigstens zwei dem wenigstens einen Rastelement zugeordnete Einrastelemente, wie Vorsprünge und/oder Vertiefungen, umfassen. Beispielsweise sind die Einrastelemente bezüglich des Rastelements formabgestimmt und/oder in Bezug auf die Dimensionierung angepasst. Gemäß einer beispielhaften Weiterbildung ist das wenigstens eine Rastelement dazu eingerichtet, in der Verstauposition und in der Sitzposition in einen Eingriff mit je einem der Einrastelemente zu gelangen, um die Halterung gegen ein Verschwenken festzuhalten. Es kann vorgesehen sein, dass die Positionierung der wenigstens zwei Einrastelemente auf eine Schwenkbewegung der Halterung, insbesondere des wenigstens einen Rastelements der Feststell- und Freigabeeinrichtung, abgestimmt ist. Insbesondere kann ein kürzester Abstand der wenigstens zwei Einrastelemente zur Schwenkachse gleich groß sein und/oder die wenigstens zwei Einrastelemente auf einem gemeinsamen Umkreis bezüglich der Schwenkachse liegen. Beispielsweise legt eines der Einrastelemente die Verstauposition und das andere der Einrastelemente die Sitzposition fest. Beim Einnehmen der Verstau- bzw. Sitzposition durch die Halterung rastet dann das wenigstens eine Rastelement des Rastmechanismus in das entsprechende Einrastelement ein, sodass die Feststell- und Freigabeeinrichtung den Sperrzustand einnimmt, um eine weitere Schwenkbewegung der Halterung zu unterbinden.

Gemäß einer beispielhaften weiteren Ausführung der erfindungsgemäßen Halterung stützt sich wenigstens eine Feder an Boden und Basis ab. Beispielsweise kann sich die wenigstens eine Feder derart an dem Boden und der Basis abstützen, dass in der Verstauposition eine maximale Federkraft zwischen Boden und Basis aufgebaut ist und/oder die Federkraft beim Verschwenken des Bodens relativ zu der Basis in Richtung der Sitzposition vorzugsweise kontinuierlich abnimmt. Die Federkraft bewirkt eine verbesserte Handhabung der Halterung während des Verschwenkens. Ferner kann die wenigstens eine Feder dem Rastelement der Feststell- und Freigabeeinrichtung eine Federkraft mitteilen, um das Rastelement in dem Verrastungseingriff mit dem Einrastelement vorzuspannen. Daher kann die Federkraft ein Verspannen des Rastmechanismus der Feststell- und Freigabeeinrichtung mit dem entsprechenden Einrastelement an der Basis bewirken, sodass eine zusätzliche Sicherung gegen ein ungewolltes Verschwenken der Halterung bereitgestellt ist und ferner das wenigstens eine Rastelement nicht an der Basis nackelt bzw. rüttelt, was durch Vibrationen während der Fahrt mit dem KFZ hervorgerufen werden kann. In einer beispielhaften Weiterbildung kann die wenigstens eine Feder derart eingestellt sein, dass das wenigstens eine Rastelement in dem Verrastungseingriff mit dem Einrastelement vorgespannt ist. Beispielsweise kann die Feder derart eingestellt sein, dass die wenigstens eine Feder dem Rastelement eine Federkraft mitteilt, um das Rastelement in einen Verrastungseingriff vorzuspannen, insbesondere derart vorzuspannen, dass die Feststell- und Freigabeeinrichtung in dem Sperrzustand festgehalten ist.

Gemäß einer beispielhaften weiteren Ausführung der vorliegenden Erfindung ist die Feststell- und Freigabeeinrichtung als Zieh- und/oder Druckhebel gebildet, der bei Betätigung, insbesondere Ziehen bzw. Drücken, zwischen Sperrzustand und Freigabezustand verbringbar ist. Beispielsweise ist der Zieh- und/oder Druckhebel rückseitig an der Halterung befestigt, sodass dieser leicht durch eine Bedienperson über den Laderaum zugänglich bzw. betätigbar ist. Eine Zieh- bzw. Druckrichtung zur Betätigung des Zieh- und/oder Druckhebels kann im Wesentlichen in Fahrzeuglängsrichtung und/oder parallel zur Schwenkachse der Halterung orientiert sein, insbesondere koaxial bezüglich der Schwenkachse liegen.

In einer weiteren beispielhaften Ausführung der erfindungsgemäßen Halterung umfasst die Befestigungseinrichtung zum Befestigen des Sitzes an der Halterung wenigstens ein Rastelement, wie einen Vorsprung und/oder eine Vertiefung, das dazu eingerichtet ist, mit einem Rastteil des Sitzes in einen Eingriff zu gelangen, um den Sitz an der Halterung zu befestigen. Der Eingriff kann beispielsweise formschlüssig und/oder kraftschlüssig realisiert sein. Beispielsweise ist das wenigstens eine Rastelement der Befestigungseinrichtung durch eine im Boden gebildete Aussparung realisiert, sodass ein Freiraum für das Eingreifen des entsprechenden Rastteils des Sitzes geschaffen ist. Beispielsweise ist in der Aussparung ein Verrastungsteil, wie eine Stange oder ein Vorsprung bzw. eine Vertiefung, vorgesehen, mit dem das Rastteil des Sitzes in einen Eingriff gelangen kann, vorzugsweise das das Rastteil des Sitzes kraft-und/oder formschlüssig umgreifen kann. Wie bereits oben erwähnt, ist es besonders vorteilhaft, wenn die Befestigungseinrichtung, also insbesondere das wenigstens eine Rastelement, derart gestaltet ist, dass die standardmäßigen, OEM-seitigen Originalsitze des entsprechenden KFZ verwendet werden können.

Gemäß einer weiteren beispielhaften Ausführung der vorliegenden Erfindung besitzt die Befestigungseinrichtung, insbesondere das wenigstens eine Rastelement, eine bezüglich des Sitzes vordefinierte Abmessung, insbesondere in Fahrzeuglängsrichtung und/oder quer zur Fahrzeuglängsrichtung. Vorzugsweise entspricht eine Länge und/oder Breite im Wesentlichen einer Länge und/oder Breite des Sitzes in der Draufsicht. Des Weiteren kann die Befestigungseinrichtung auf das vordefinierte, insbesondere standardmäßige, OEM-seitig festgelegte, Rastteil des Sitzes formabgestimmt sein, vorzugsweise um das formschlüssige und/oder kraftschlüssige Ineinandergreifen zum Befestigen des Sitzes an der Halterung zu realisieren. In einer weiteren beispielhaften Ausführung umfasst die Befestigungseinrichtung wenigstens zwei an dem Boden vorgesehene Rastelemente, die quer, insbesondere senkrecht, zur Fahrzeuglängsrichtung in einem Abstand zueinander angeordnet und einem vordefinierten, insbesondere standardmäßigen, OEM-seitig festgelegten, Rastteil-Paar des Sitzes zugeordnet sind. Beispielsweise kann ein Rastelement-Paar frontseitig an der Halterung, insbesondere am Boden, vorgesehen sein und ein Rastelement-Paar rückseitig, um jeweils mit einem entsprechenden Rastteil-Paar des Sitzes, der beispielsweise vier im Wesentlichen als Füße ausgebildete Stützelemente besitzt, an denen die sitzseitigen Rastteile angeordnet sind, zusammenzuwirken.

In einer weiteren beispielhaften Ausführung der erfindungsgemäßen Halterung sind die wenigstens zwei Rastelemente, die vorzugsweise ein Rastelement-Paar bilden, der Befestigungseinrichtung bezüglich des vordefinierten Rastteil-Paars des Sitzes formabgestimmt und/oder ein Abstand der zwei Rastelemente zueinander ist derart auf eine Rastteil-Paar-Abmessung, insbesondere Breite quer zur Fahrzeuglängsrichtung, abgestimmt. Dadurch wird die erfindungsgemäß vorteilhafte einfache und an den entsprechenden KFZ-Hersteller angepasste Befestigung des sechsten bzw. siebten Sitzes im Laderaum auch für einen behindertengerechten KFZ ermöglicht, insbesondere ohne, dass aufwendige Umbaumaßnahmen und/oder Sitz-Einzelanfertigungen notwendig bzw. zu erwerben sind.

Gemäß einem weiteren Aspekt der vorliegenden Erfindung, der mit den vorhergehenden Aspekten und beispielhaften Ausführungen der Erfindung kombinierbar ist, ist ein Kraftfahrzeug (KFZ) bereitgestellt. Insbesondere handelt es sich um ein behindertengerechtes KFZ, wie Pkw oder Nutzfahrzeug, mit dem Rollstuhlfahrer transportiert werden können, insbesondere bei dem ein Rollstuhl und/oder ein Rollstuhl samt Insasse vorzugsweise mittels einer Fahrzeugheckseitig anzubringenden Rampe in den fahrzeugheckseitigen Laderaum einfahren bzw. eingeschoben werden kann, um dort während der Fahrt verstaut und vorzugsweise gesichert werden zu können.

Das KFZ umfasst einen rückseitigen Sitz, vorzugsweise einen sechsten und/oder siebten Sitz.

Ferner umfasst das KFZ einen rückseitigen Laderaum mit einem im Wesentlichen wannenartigen Laderaumboden, der seitliche, insbesondere sich in Fahrzeuglängsrichtung erstreckende, Wannenränder aufweist und einen gemeinsamen Wannengrund besitzt, der vorzugsweise bezüglich der Wannenränder nach unten, das heißt in Vertikalrichtung, herabgesetzt ist und in den die Wannenränder münden. Auf dem Wannengrund ist ein Rollstuhl vorzugsweise samt Insasse in dem Laderaum verstaubar. Beispielsweise kann ein Rollstuhl in dem Laderaum auf dem Wannengrund während der Fahrt verstaubar sein und/oder der Laderaum mittels einer Rampe von außen durch den Rollstuhl befahrbar sein.

Des Weiteren umfasst das erfindungsgemäße KFZ eine Halterung zum Montieren des Sitzes in dem Laderaum. Die Halterung kann beispielsweise gemäß einem der vorangehenden beispielhaften Ausführungen und/oder Aspekte der vorliegenden Erfindung realisiert sein. Die Halterung kann eine an einem Wannenrand befestigte Basis und einen schwenkbar mit der Basis gekoppelten Boden aufweisen. Ferner kann die Halterung sich in einer geneigten, insbesondere horizontalen, Sitzposition, in der der Sitz an der Halterung befestigbar ist, brückenartig wenigstens teilweise über den Wannengrund erstrecken. Des Weiteren kann die Halterung in einer aufrechten, insbesondere vertikalen, Verstauposition den Laderaum freigeben, insbesondere derart freigeben, dass ein Verstauen eines Rollstuhls vorzugsweise samt Insasse in dem Laderaum und/oder auf dem Wannengrund ermöglicht ist.

Die vorliegende Erfindung betrifft auch ein Verfahren zum Montieren eines Sitzes, insbesondere eines sechsten oder siebten Sitzes in einem rückseitigen Laderaum eines KFZ, vorzugsweise eines behindertengerechten Pkw oder Nutzfahrzeug. Der Laderaum kann beispielsweise einen wannenartigen Laderaumboden mit seitlichen Wannenrändern besitzen, die in einen gemeinsamen Wannengrund münden, auf dem ein Rollstuhl vorzugsweise samt Insasse in dem Laderaum verstaubar ist.

Gemäß dem erfindungsgemäßen Verfahren wird eine Halterung an einem seitlichen Wannenrand befestigt. Beispielsweise kann die Halterung gemäß einem der zuvor beschriebenen Aspekte und/oder beispielhaften Ausführungen ausgebildet sein. Zum Unterbringen eines Rollstuhls in dem Laderaum wird die Halterung in eine aufrechte, insbesondere vertikale, Verstauposition verlagert, insbesondere verschwenkt, des Weiteren wird zum Montieren eines Sitzes in dem Laderaum die Halterung in eine geneigte, insbesondere horizontale, Sitzposition verlagert, insbesondere verschwenkt. In der Sitzposition wird der Sitz, insbesondere der sechste und/oder der siebte Sitze an der Halterung befestigt. Ein weiterer Vorteil der vorliegenden Erfindung besteht darin, dass bestehende Kraftfahrzeuge durch das erfindungsgemäße Verfahren und/oder mittels der erfindungsgemäßen Halterung nachgerüstet, insbesondere upgegraded, werden können.

In einer beispielhaften Ausführung des erfindungsgemäßen Verfahrens ist das Verfahren dazu eingerichtet, die erfindungsgemäße Halterung gemäß einem der zuvor beschriebenen Aspekte und/oder beispielhaften Ausführungen zu realisieren.

Bevorzugte Ausführungen sind in den Unteransprüchen gegeben.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Fig. 1: eine perspektivische Ansicht eines Ausschnitts eines rückseitigen Laderaums eines erfindungsgemäßen Kraftfahrzeugs, in dem eine erfindungsgemäße Halterung mit einem Sitz montiert ist;
- Fig. 2: eine perspektivische Ansicht eines rückseitigen Laderaums eines erfindungsgemäßen Kraftfahrzeugs, in dem eine erfindungsgemäße Halterung montiert ist;
- Fig. 3: eine perspektivische Ansicht des Ausschnitts nach Fig. 2, wobei die Halterung in einer weiteren Betriebsposition dargestellt ist;
- Fig. 4: eine perspektivische Ansicht einer erfindungsgemäßen Halterung;
- Fig. 5: eine perspektivische Ansicht der erfindungsgemäßen Halterung gemäß Fig. 4 in einer weiteren Betriebsposition;
- Fig. 6: eine perspektivische Ansicht eines Ausschnitts einer erfindungsgemäßen Halterung mit daran befestigtem Sitz;
- Fig. 7: eine perspektivische Ansicht eines Ausschnitts der erfindungsgemäßen Halterung mit daran befestigtem Sitz;
- Fig. 8: eine perspektivische Ansicht der Halterung gemäß Fig. 7, wobei ein Teil der Halterung weggelassen wurde;

- Fig.9: eine Seitenansicht der erfindungsgemäßen Halterung in einer Betriebsposition; und
- Fig. 10: eine Seitenansicht der erfindungsgemäßen Halterung in einer weiteren Betriebsposition.

In der folgenden Beschreibung beispielhafter Ausführungen ist eine erfindungsgemäße Halterung im Allgemeinen mit der Bezugsziffer 1 versehen. Die Halterung 1 ist dazu eingerichtet, einen Sitz 3 oder eine Sitzbank, insbesondere einen sechsten oder siebten Sitz, in einem rückseitigen Laderaum 5 eines insbesondere erfindungsgemäßen KFZ, das vorzugsweise ein behindertengerechter Pkw oder Nutzfahrzeug ist, zu montieren. Die erfindungsgemäße Halterung 1 ist ferner dazu eingerichtet, in einer Betriebsposition das Befestigen des rückseitigen Sitzes 3, insbesondere des sechsten oder siebten Sitzes, zu ermöglichen, um eine zusätzliche Sitzposition bereitzustellen, und in einer weiteren Betriebsposition den rückseitigen Laderaum 5 im Wesentlichen freizugeben, sodass beispielsweise ein Rollstuhl samt Insasse in dem rückseitigen Laderaum 5 untergebracht werden kann.

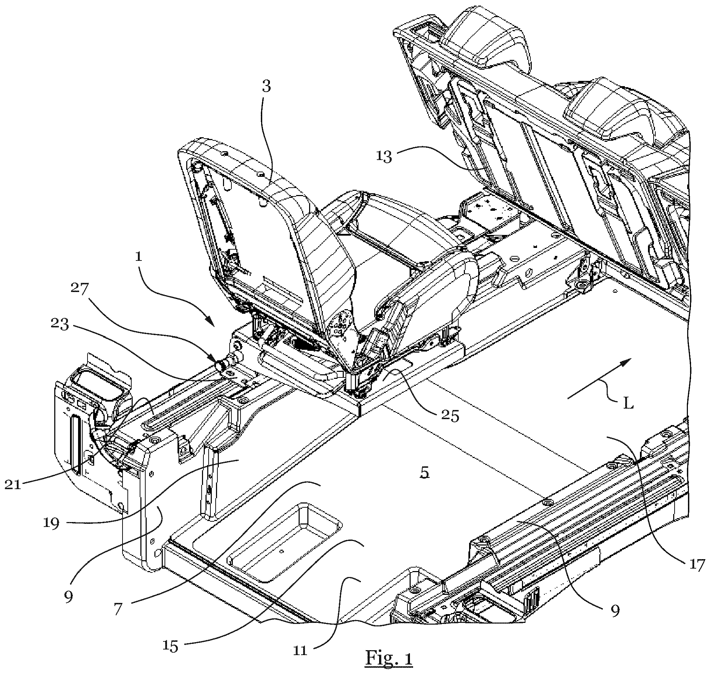

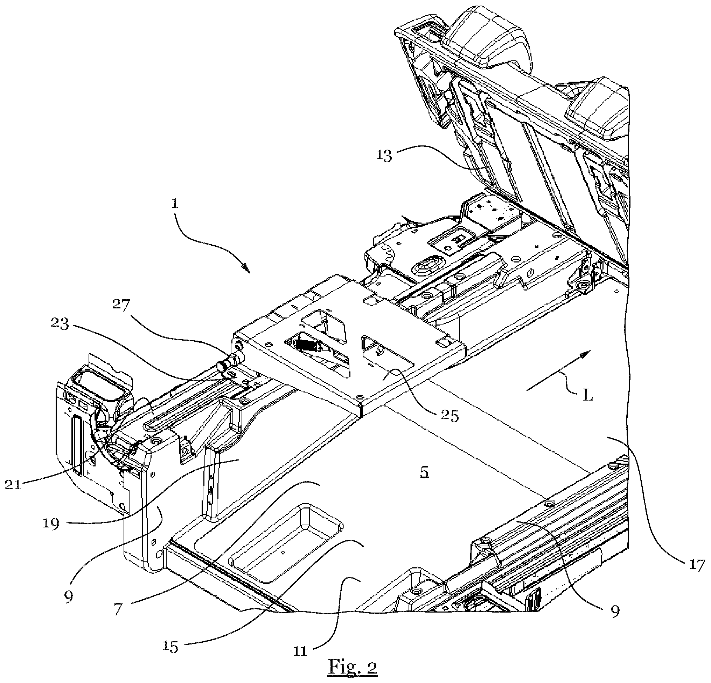

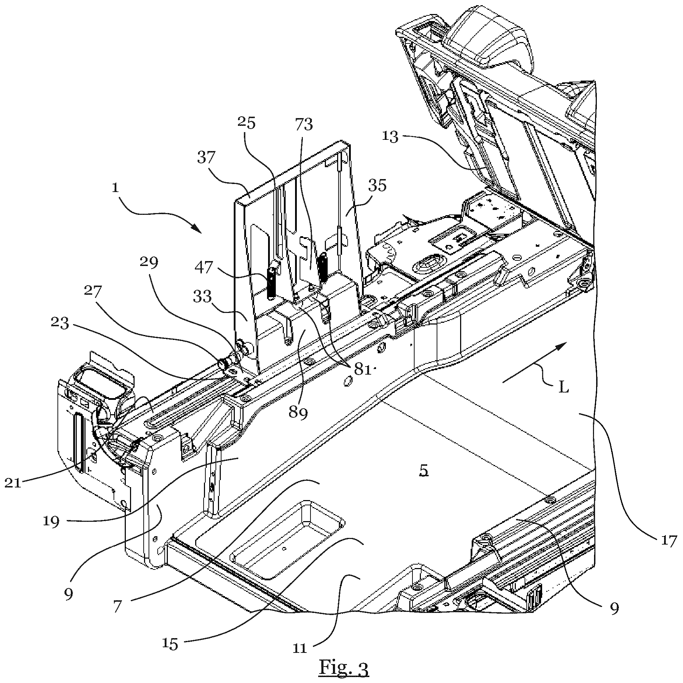

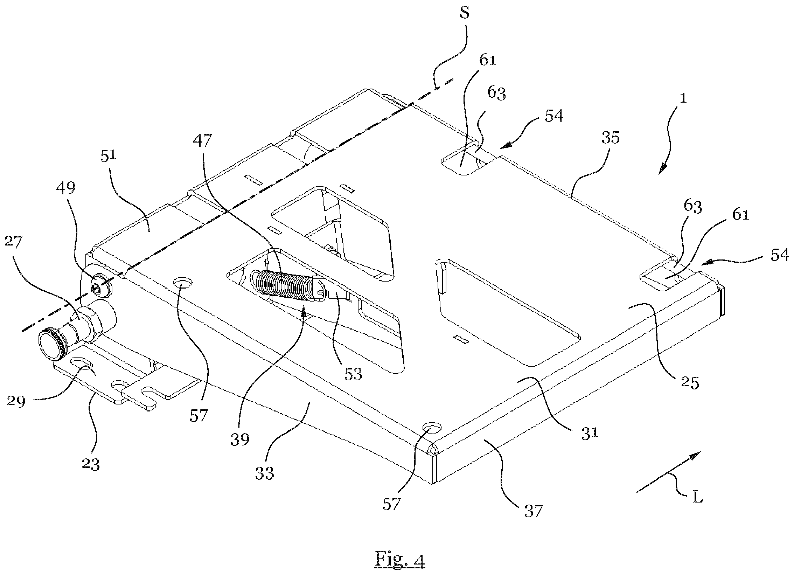

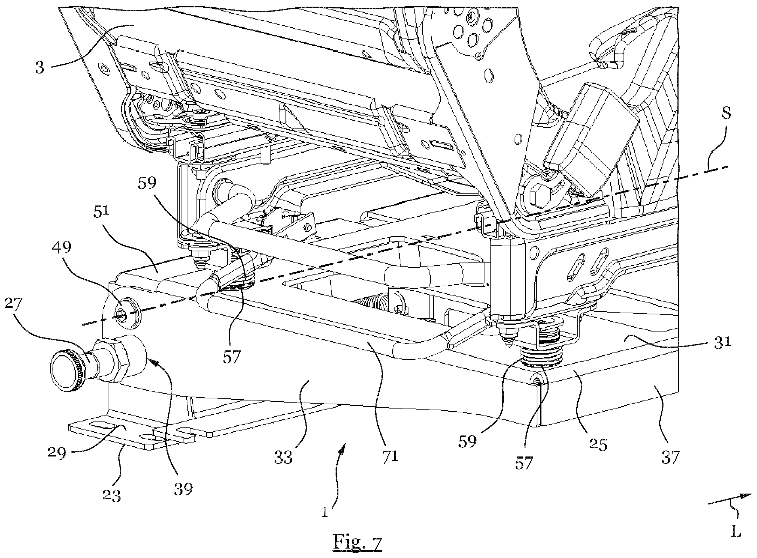

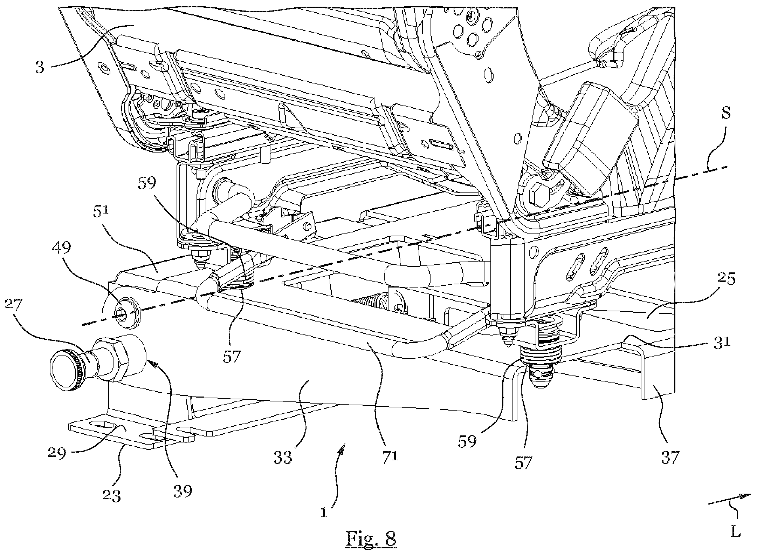

In Bezug auf Fig. 1 wird hauptsächlich die Anordnung bzw. Anbringung der Halterung 1 in bzw. an dem KFZ sowie die Positionierung des rückseitigen Sitzes in dem Laderaum 5 erläutert. In Bezug auf Fig. 2 und 3 sind zwei Betriebsstellungen der erfindungsgemäßen Halterung 1 abgebildet. Anhand der Fig. 4 bis 10 wird auf die Funktionsweise und Struktur der Halterung 1 näher eingegangen.

Ein erfindungsgemäßes Kraftfahrzeug (KFZ; nicht dargestellt) umfasst einen rückseitigen Laderaum 5 mit einem Wannenartigen Laderaumboden 7, dessen seitliche Wannenränder 9 in einen gemeinsamen Wannengrund 11 münden, auf dem beispielsweise ein Rollstuhl (nicht dargestellt) samt Insasse in dem Laderaum 5 verstaubar ist. Das erfindungsgemäße KFZ kann außerdem eine in Fahrzeuglängsrichtung L betrachtet mittlere oder vordere Sitzbank 13 aufweisen, die Sitzmöglichkeit für zwei bis drei Personen bietet. Die Wannenränder 9 erstrecken sich vom Fahrzeugheck in Fahrzeuglängsrichtung L nach vorne wenigstens bis zur Sitzbank 13 und sind im Wesentlichen identisch ausgebildet. Der wannenartige Laderaumboden 7, dessen Wannengrund 11 die Ladefläche bzw. Verstaufläche für einen Rollstuhl samt Insasse bereitstellt, umfasst einen heckseitigen Rampenabschnitt 15, der bezüglich der Horizontalebene geneigt ist, sodass ein Rollstuhl auf einfache Weise in den Laderaum 5 einfahren kann, und einen daran anschließenden im Wesentlichen sich in Horizontalrichtung erstreckenden Verstauungsabschnitt 17, der sich in Richtung Sitzbank 13 fortsetzt. Der Wannengrund 11 macht in der Breite, das heißt quer zur Fahrzeuglängsrichtung L, einen Großteil der Breite des KFZ im Inneren aus, insbesondere um möglichst viel Stauraum bereitzustellen. Die seitlichen Wannenränder 9 umfassen je eine sich nach oben, insbesondere vertikal nach oben, von dem Wannengrund 11 aus erstreckende Seitenwand 19, dessen Höhe im Bereich des Rampenabschnitts 15 in Richtung Fahrzeugheck zunehmend sich vergrößert, damit eine im Wesentlichen konstante Höhe, insbesondere Vertikalhöhe, der Wannenränder 9 in Bezug auf das KFZ gebildet ist. Außerdem umfassen die Wannenränder 9 eine im Wesentlichen in der Horizontalebene liegende, an die Seitenwand 19 anschließende Auflagefläche 21, an der die Halterung 1 wenigstens teilweise befestigt ist. Die Auflagefläche 21 kann beispielsweise eine im Wesentlichen ebene, sich im Bereich von 1/10 bis 1/3 einer quer zur Fahrzeuglängsrichtung bemessenen Sitzbreitenabmessung aufweisen. Bei dem Sitz 3 handelt es sich insbesondere um einen standardmäßigen, OEM-seitig hergestellten Originalsitz, der im Stand der Technik nicht in einem Kraftfahrzeug mit einem derartig vorgesehenen Laderaum 5 kombinierbar war, insbesondere bei KFZ, deren rückseitiger Laderaum 5 behindertengerecht umgestaltet wurde, so wie es beispielhaft in den Fig. 1 bis 3 abgebildet ist.

In den Fig. 1 und 2 ist eine erste Betriebsposition der erfindungsgemäßen Halterung 1 abgebildet. Bei dieser ersten Betriebsposition handelt es sich beispielsweise um eine sogenannte Sitzposition, in der die Halterung geneigt, insbesondere horizontal geneigt, ist, sodass der Sitz 3 an der Halterung 1 im Laderaum 5 befestigbar ist, um eine zusätzliche Sitzposition zu gewährleisten. Fig. 2 entspricht im Wesentlichen Fig. 1, wobei insbesondere der Sitz 3 zur besseren Darstellung der erfindungsgemäßen Halterung 1 weggelassen wurde. In Fig. 2 sind bereits weitere Hauptkomponenten der erfindungsgemäßen Halterung 1 ersichtlich, auf die in Bezug auf die Fig. 4 bis 8 noch näher eingegangen wird: eine Basis 23, die an einem Wannenrand 9 befestigt ist; ein schwenkbar an die Basis 23 gekoppelter Boden 25, auf dem der Sitz zu befestigen ist und der sich in der Sitzposition (Fig. 1, 2) brückenartig teilweise über den Wannengrund 11 erstreckt; und eine insbesondere manuell zu betätigende Feststell-und Freigabeeinrichtung 27 zum Freigeben bzw. Sperren einer Bewegungsmöglichkeit der erfindungsgemäßen Halterung 1.

In Fig. 3 ist die erfindungsgemäße Halterung 1 in einer weiteren Betriebsposition abgebildet, nämlich insbesondere einer aufrechten, insbesondere vertikalen, Verstauposition, in der beispielsweise ein Rollstuhl insbesondere samt Insasse in dem Laderaum 5 unterbringbar ist. Vorteilhafterweise befindet sich die erfindungsgemäße Halterung 1 im Wesentlichen ausschließlich im Bereich der seitlichen Wannenränder 9, sodass der Großteil, insbesondere vollständig, der Laderaum 5 beispielsweise für den Rollstuhl zur Verfügung steht. In der Verstauposition (Fig. 3) erstreckt sich beispielsweise der Boden 25 im Wesentlichen nach oben, insbesondere senkrecht zu einer Basisgrundfläche 27 der Basis 23, und in der Sitzposition (Fig. 1, 2) der Halterung 1 erstreckt sich der Boden 25 seitlich von der Basis 23 weg, wobei insbesondere der Boden sich im Wesentlichen parallel zu der Basisgrundfläche erstreckt, vorzugsweise im Wesentlichen in einer Horizontalebene.

Die Feststell- und Freigabeeinrichtung 27 kann einen Sperrzustand einnehmen, in dem die Halterung 1 gegen eine Verlagerung fixiert ist. Des Weiteren kann Feststell- und Freigabeeinrichtung einen Freigabezustand einnehmen, insbesondere kann die Feststell- und Freigabeeinrichtung zwischen Sperrzustand und Freigabezustand verbringbar sein, in dem die Halterung 1 zwischen der Verstau- und der Sitzposition verlagerbar, insbesondere verschwenkbar, ist. Beispielsweise ist vorgesehen, dass die Feststell- und Freigabeeinrichtung sowohl in der Verstauposition als auch in der Sitzposition der Halterung 1 den Sperrzustand einnehmen kann, um eine weitere Verlagerung der Halterung zu unterbinden, sodass der Boden 25 relativ zu der Basis 23 gegen ein Verschwenken fixiert ist, während in dem Freigabezustand eine Schwenkbewegung des Bodens 25 relativ zu der Basis 23 zugelassen ist. Beispielsweise nimmt die Feststell- und Freigabeeinrichtung 27 ausschließlich in der Sitz- bzw. Verstauposition den Sperrzustand ein.

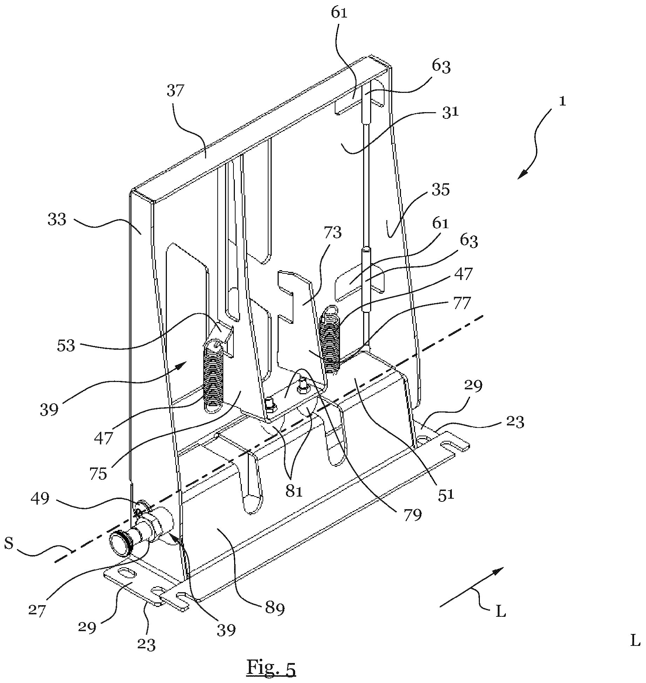

In Bezug auf die Fig. 4 und 5 wird die erfindungsgemäße Halterung näher beschrieben. Die erfindungsgemäße Halterung 1 kann beispielsweise im Wesentlichen aus Metall oder Kunststoff hergestellt sein, beispielsweise mittels eines Umformverfahrens. Die Halterung 1, insbesondere der Boden 25, umfasst eine Bodenfläche 31, die im Wesentlichen dazu dient, den Sitz 3 aufzunehmen und die im Wesentlichen eben und/oder rechteckförmig, insbesondere quadratisch, gebildet ist. Beispielsweise kann die Bodenfläche 31 aus einem dünnwandigen platten Profil hergestellt sein, an dessen in Fahrzeuglängsrichtung L weisenden Randbereichen Seitenflächen 33, 35 anschließen, die beispielsweise aus einem Stück mit der Bodenfläche 31 hergestellt sind und im Wesentlichen um 90° gebogen sind. Außerdem schließt an die Bodenfläche 31 an einer die Seitenflächen 33, 35 verbindenden Stirnseite eine Stirnfläche 37 an, die beispielsweise ebenfalls aus einem Stück mit der Bodenfläche 31 und/oder den Seitenflächen 33, 35 hergestellt ist, beispielsweise durch Umbiegen. Der Boden 25 ist zur Unterseite hin offen gestaltet, wie insbesondere in Fig. 5 zu sehen ist.

Die Feststell- und Freigabeeinrichtung 27 ist zu einer Schwenkachse S, um die der Boden 25 relativ zu der Basis 23 zwischen der Verstau- und der Sitzposition verschwenkbar ist, versetzt. Dies ist aus Zusammenschau der Fig. 4 und 5 ersichtlich, in denen die Schwenkachse S durch eine strich-punktierte Linie angedeutet ist. Die Schwenkachse S ist im Wesentlichen in Fahrzeuglängsrichtung L orientiert und liegt im Bereich eines wannenrandseitigen Endes der Halterung 1 und/oder im Bereich der Basis 23, also im Bereich eines Wannenrands 9. Dadurch wird insbesondere gewährleistet, dass eine platzsparende Unterbringung der Halterung in der Verstauposition realisiert ist.

Die Feststell- und Freigabeeinrichtung 27 umfasst auch einen Rastmechanismus 39, der die Feststell- und Freigabeeinrichtung 27 in dem Sperrzustand festhält. Das Festhalten bzw. Beibehalten des Sperrzustands kann durch formschlüssiges und/oder kraftschlüssiges Einrasten beispielsweise mit einem entsprechenden Verrastungspartner, wie einem basisseiten Einrastelement, geschehen. Beispielsweise ist der Rastmechanismus 39 derart ausgelegt, dass die Feststell- und Freigabeeinrichtung 27 beim Einnehmen der Verstauposition (Fig. 5) sowie beim Einnehmen der Sitzposition (Fig. 4) automatisch in den Sperrzustand übergeht, um ein weiteres Verlagern der erfindungsgemäßen Halterung zu unterbinden.

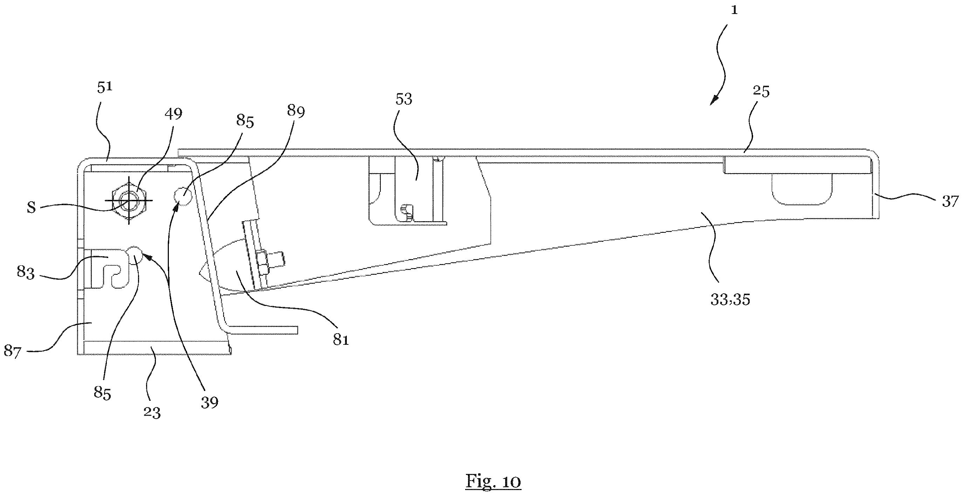

Erneut bezugnehmend auf Figur 5 ist zu erkennen, dass die Halterung 1 an ihrer Unterseite ein im Wesentlichen U-förmiges Profil 73 aufweist, welches in Richtung der Stirnfläche 37 der Halterung 1 offen ist. Dabei ist an den beiden gegenüber liegenden Schenkeln 75, 77 des U-förmigen Profils 73 je eine Befestigungslasche 53 vorgesehen, mit der je eine Feder 47 zusammenwirkt. An einer die Schenkel 75, 77 miteinander verbindenden Grundfläche 79 sind zwei elastische Komponenten, wie Gummiblöcke 81, vorgesehen, welche näher in Bezug auf Figur 10 beschrieben werden.

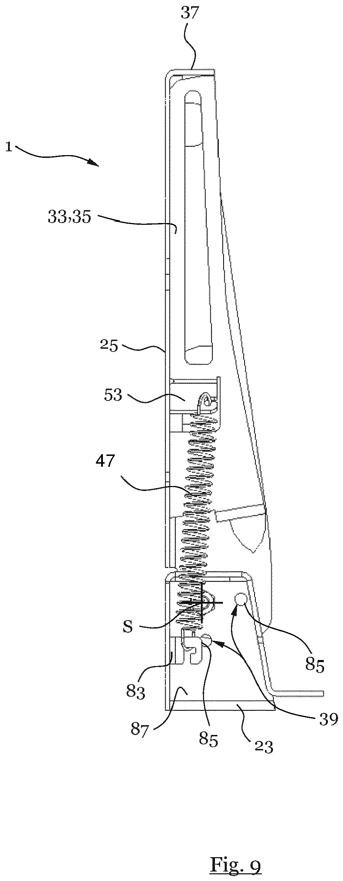

In Bezug auf die Figuren 9 und 10 wird das Einrasten der Halterung 1 in der Sitzposition (Figur 10) bzw. Verstauposition (Figur 9) näher beschrieben. In den Figuren 9 und 10 ist die Feststell- und Freigabeeinrichtung 27 zur besseren Übersichtlichkeit weggelassen; in Figur 10 ist zusätzlich die Feder 47 weggelassen. In Figur 9 befindet sich die Halterung 1 in der aufrechten Verstauposition, in der eine maximale Federkraft der Feder 47 zwischen Basis 23 und Boden 25 aufgebaut ist. Die Feder 47 stützt sich bodenseitig an der Lasche 53 und basisseitig an einer Lasche 83 ab. Die Federkraft bewirkt zum einen eine verbesserte Handhabung der Halterung 1 während des Verschwenkens. Zum anderen bewirkt die Federkraft ein Verspannen des Rastmechanismus 39 der Feststell- und Freigabeeinrichtung 27 mit dem entsprechenden Einrastelement 85 an der Basis 23. Die Basis 23 umfasst an einer rückseitigen Seitenfläche 87, die im Wesentlichen senkrecht zur Schwenkachse S orientiert ist, zwei Einrastvertiefungen 85, in die das Rastelement des Rastmechanismus 39, also der Feststell- und Freigabeeinrichtung 27, jeweils einrasten kann, wobei die obere Einrastvertiefung 85 mit der Feststell- und Freigabeeinrichtung 27 in der aufrechten Verstauposition der Halterung 1 zusammenwirkt und die untere Einrastvertiefung 85 mit der Feststell- und Freigabeeinrichtung 27 in der geneigten Sitzposition der Halterung 1 zusammenwirkt. Es ist zu erkennen, dass die Einrastelemente 85 einen gleichen Abstand bezüglich der Schwenkachse S aufweisen, die durch den Bolzen 49 festgelegt ist, der unter anderem Basis 23 und Boden 25 miteinander verbindet. Dies bedeutet, dass der Boden 25 bezüglich der Basis 23 eine Schwenkbewegung um die Schwenkachse S durchführt, was aus einer Zusammenschau der Figuren 9 und 10 hervorgeht. Unter Bezugnahme auf Figur 10, in der die Sitzposition der Halterung 1 abgebildet ist, ist außerdem zu erkennen, dass elastische Komponenten 81, insbesondere Gummiblöcke, die beispielsweise spitz zulaufend und/oder kegelförmig bzw. kegelstumpfförmig ausgebildet sein können, in der Sitzposition der Halterung 1 gegen die Basis 23, insbesondere eine in das Fahrzeuginnere gewandte Gegenfläche 89 der Basis 23 verspannt werden. Beim Einnehmen der Sitzposition entsteht eine Deformationsrückstellkraft, die durch die elastische Deformation der Gummiblöcke einhergeht und eine Vorspannkraft auf den Rastmechanismus 39 bewirkt, insbesondere um das wenigstens eine Rastelement des Rastmechanismus 39 innerhalb des Verrastungseingriffs mit dem entsprechenden Einrastelement 85 vorzuspannen. Dadurch lässt sich, analog zu der Federvorspannkraft in der Verstauposition, vermeiden, dass die Halterung wackelt, beispielsweise in Folge von Vibrationen während der Fahrt des KFZ.

Die Feststell- und Freigabeeinrichtung 27 ist beispielsweise als Zieh- und/oder Druckhebel gebildet, der beim Betätigen durch eine Bedienperson gedrückt bzw. gezogen werden kann, um zwischen Sperrzustand und Freigabezustand verbringbar zu sein. Dabei kann der Rastmechanismus derart ausgelegt sein, dass bei Betätigung der Feststell- und Freigabeeinrichtung 27, bzw. des Zieh- und/oder Druckhebels, das Rastelement des Rastmechanismus aus dem Verrastungseingriff mit dem Einrastelement 85 der Basis 23 gebracht wird, um ein Verlagern der Halterung 1 zuzulassen. Ferner kann die wenigstens eine Feder 47 derart eingestellt sein, dass beim Einnehmen der Verstauposition automatisch eine Federkraft wiederaufgebaut wird, damit die Halterung 1 gegen eine Verlagerung zusätzlich gesichert ist und unerwünschte Bewegungen und/oder Vibrationsübertragungen zwischen Basis und Boden 25 ausgeschlossen sind. Der Boden 25 kann beispielsweise an einen Brückenabschnitt 51 der Basis 23 mittels des die Schwenkachse S definierenden Bolzens 49 befestigt sein. Beispielsweise kann der Brückenabschnitt 51 sich von der Basisgrundfläche 29 der Basis 23 im Wesentlichen vertikal nach oben bis in etwa auf Höhe der Bodenfläche 31 erstrecken und sich im Wesentlichen entlang der vollständigen Längserstreckung in Fahrzeuglängsrichtung L der Bodenfläche 31 ausbilden und schließlich wieder in die Basis 23, insbesondere in die Basisgrundfläche 29, münden. Wie in den Fig. 4 und 5 zu sehen ist, stützt sich die Feder zum einen an einer an der Unterseite der Bodenfläche 31 ausgebildeten Lasche 53 und zum anderen im Bereich des Brückenabschnitts 51 an der Basis 23 ab.

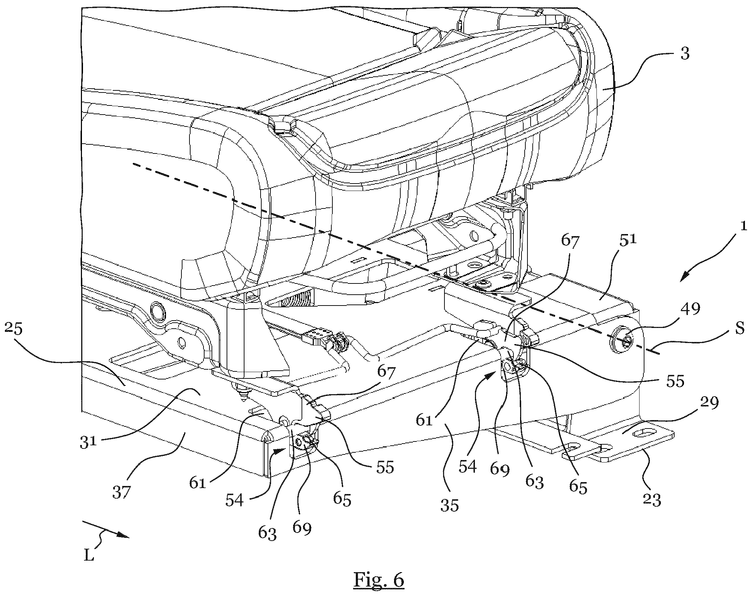

In Bezug auf die Fig. 6 bis 8 wird die Befestigungseinrichtung der Halterung 1 näher beschrieben, mittels der der Sitz 3 lösbar an der Halterung 1 befestigbar ist. Die Befestigungseinrichtung erlaubt es einem Benutzer, die standardmäßigen OEM-seitig hergestellten Originalsitze des entsprechenden KFZ zu verwenden, um rückseitig im Laderaum 5 eine Sitzoption zur Verfügung zu stellen, insbesondere ohne dass zusätzliche Umbaumaßnahmen bei vorzugsweise behindertengerechten KFZ, wie Pkw oder Nutzfahrzeugen, notwendig sind oder Einzelanfertigungen für Sitze erworben werden müssen. Dies bedeutet, dass die Befestigungseinrichtung auf die standardmäßigen, OEM-seitig vorgesehenen Befestigungsmittel des Sitzes 3 abgestimmt, insbesondere dimensioniert und/oder formangepasst, ist. Vorderseitig bezüglich der Fahrzeuglängsrichtung L umfasst die Befestigungseinrichtung zwei Rastelemente 53, die dazu eingerichtet sind, mit dem OEM-seitigen Rastteil 55 des Sitzes 3 in einen vorzugsweise formschlüssigen und/oder kraftschlüssigen Eingriff zu gelangen, um den Sitz 3 an der Halterung 1 zu befestigen. Des Weiteren umfasst die Befestigungseinrichtung, in Fahrzeuglängsrichtung L betrachtet, heckseitige Rastelemente 57, die im Wesentlichen als Durchgangsbohrungen in dem Boden 25, insbesondere der Bodenfläche 31, realisiert sind. Die Rastvertiefungen 57 kooperieren mit standardmäßigen, OEM-seitig vorgesehenen Rastteilen 59, die wenigstens teilweise, vorzugsweise vollständig, in die Rastvertiefung 57 hineinragen, vorzugsweise hindurchragen. Dies bedeutet, dass je ein frontseitiges Rastelement-Paar 54 der Halterung 1 mit einem entsprechenden Rastteil-Paar 55 des Sitzes 3 und ein fahrzeugheckseitiges Rastelement-Paar 57 der Halterung 1 mit einem rückseitigen Rastteil-Paar 59 des Sitzes 3 zusammenwirkt. Beispielsweise besitzt jedes der Rastelemente 54, 57 eine bezüglich des Sitzes 3, insbesondere bezüglich der Rastteile 55, 59 vordefinierte Abmessung und/oder ist bezüglich der Rastteile 59, 55 formabgestimmt und/oder ein Abstand eines Rastelement-Paars 54 bzw. 57 quer zur Fahrzeuglängsrichtung L ist auf einen entsprechenden Abstand des entsprechenden Rastteil-Paars 55 bzw. 59 abgestimmt. Das fahrzeugheckseitige Rastteil-Paar 59 kann beispielsweise jeweils ein im Wesentlichen zylindrischer Bolzen sein, der beispielsweise zu einem Ende hin kegel- oder kegelstumpfförmig realisiert ist, insbesondere um das Eingreifen bzw. Einrasten in die Rastvertiefung 57 am Boden 25 zu erleichtern.

Die fahrzeugfrontseitigen Rastelemente 54 umfassen eine Vertiefung 61, um ein Eingreifen des hakenartigen Rastteils 55 des Sitzes 3 zu ermöglichen. Um den formschlüssigen und/oder kraftschlüssigen Eingriff zum Festhalten des Sitzes 3 an der Halterung 1 mit dem hakenartigen Rastteil 55 zu gewährleisten, erstreckt sich quer zur Fahrzeuglängsrichtung L und insbesondere im Wesentlichen entlang der vollständigen Breitenerstreckung der Halterung 1, wie es in Figur 5 zu sehen ist, eine Raststange 63, die von dem hakenartigen Rastteil 55 des Sitzes 3 umgriffen wird, um den Sitz 3 an der Halterung 1 lösbar zu befestigen. Das hakenartige Rastteil 55 umfasst einen in Fahrzeuglängsrichtung L offenen Eingriffsraum 65, der von je einer Eingriffsflanke 67, 69 des Rastteils 55 begrenzt ist. Dadurch lässt sich der Sitz 3 auf einfache Weise lösbar an der Halterung 1 befestigen, wobei vorteilhafterweise die standardmäßigen OEM-Sitze verwendet werden können.

Eine Löseeinrichtung 71 zum Demontieren des Sitzes 3 von der Halterung 1 ist OEM-seitig vorgesehen und auf diese wird daher nicht im Detail eingegangen. Jedenfalls ist die Halterung 1, insbesondere die Befestigungseinrichtung der Halterung 1, auf diese Löseeinrichtung 71 angepasst, um die lösbare Befestigung und Demontage des Sitzes 3 an der Halterung 1 zu gewährleisten.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Halterung
- 3: Sitz
- 5: Laderaum
- 7: Laderaumboden
- 9: Wannenrand
- 11: Wannengrund
- 13: Sitzbank
- 15: Rampenabschnitt
- 17: Verstauabschnitt
- 19: Seitenwand
- 21: Auflagefläche
- 23: Basis
- 25: Boden
- 27: Feststell- und Freigabeeinrichtung
- 29: Basisgrundfläche
- 31: Bodenfläche
- 33, 35: Seitenfläche
- 37: Stirnfläche
- 39: Rastmechanismus
- 47: Feder
- 49: Verschraubung
- 51, 53: Lasche
- 54: Rastelement
- 55: Rastteil
- 57: Rastelement
- 59: Rastteil
- 61: Vertiefung
- 63: Raststange
- 65: Eingriffsfreiraum
- 67, 69: Eingriffsflanke
- 71: Löseeinrichtung
- 73: U-Profil
- 75, 77: Schenkel
- 79: Bodenfläche
- 81: elastische Komponente
- 83: Lasche
- 85: Einrastelement
- 87: Seitenfläche
- 89: Gegenfläche
- L: Fahrzeuglängsrichtung
- S: Schwenkachse

## Patentansprüche

1. Halterung (1) zum Montieren eines Sitzes (3), insbesondere eines sechsten oder siebten Sitzes, in einem rückseitigen Laderaum (5) mit einem wannenartigen Laderaumboden (7), dessen seitliche Wannenränder (9) in einen gemeinsamen Wannengrund (11) münden, auf dem ein Rollstuhl in dem Laderaum (5) verstaubar ist, eines behindertengerechten PKW oder Nutzfahrzeugs, umfassend eine Befestigungseinrichtung zum lösbaren Befestigen des Sitzes an der Halterung (1) und eine an einem Wannenrand (9) zu befestigende Basis (23), wobei die Halterung (1) dazu eingerichtet ist, eine aufrechte, insbesondere vertikale, Verstauposition, in der ein Rollstuhl in dem Laderaum (5) unterbringbar ist, und eine geneigte, insbesondere horizontale, Sitzposition einzunehmen, in der der Sitz (3) an der Halterung (1) befestigbar ist.

2. Halterung (1) nach Anspruch 1, wobei ein Boden (25) schwenkbar an die Basis (23) gekoppelt ist und sich in der Sitzposition brückenartig wenigstens teilweise über den Wannengrund (11) erstreckt.

3. Halterung (1) nach Anspruch 2, wobei der Boden (25) derart schwenkbar an die Basis (23) gekoppelt ist, dass der Boden (25) sich in der Verstauposition der Halterung (1) im Wesentlichen nach oben, insbesondere senkrecht zu einer Basisgrundfläche (29), erstreckt und in der Sitzposition der Halterung (1) sich der Boden (25) seitlich von der Basis (23) weg, insbesondere im Wesentlichen parallel zu der Basisgrundfläche (29), erstreckt.

4. Halterung (1) nach einem der vorstehenden Ansprüche, umfassend eine insbesondere manuell zu betätigende Feststell- und Freigabeeinrichtung (27), welche zwischen einem Sperrzustand, in dem die Halterung (1) gegen eine Verlagerung fixiert ist, und einem Freigabezustand verbringbar ist, in dem die Halterung (1) zwischen der Verstau- und der Sitzposition verlagerbar, insbesondere verschwenkbar, ist.

5. Halterung (1) nach Anspruch 4, wobei die Feststell- und Freigabeeinrichtung (27) in dem Sperrzustand den Boden (25) relativ zu der Basis (23) gegen ein Verschwenken fixiert und in dem Freigabezustand eine Schwenkbewegung des Bodens relativ zu der Basis (23) zulässt.

6. Halterung (1) nach Anspruch 4 oder 5, wobei eine Schwenkachse, um die der Boden (25) relativ zu der Basis (23) zwischen der Verstau- und der Sitzposition verschwenkbar ist, bezüglich der Feststell- und Freigabeeinrichtung (27), insbesondere bezüglich einer Betätigungsrichtung der Feststell- und Freigabeeinrichtung (27), versetzt ist, wobei insbesondere die Schwenkachse (S) im Wesentlichen in Fahrzeuglängsrichtung orientiert ist und/oder an einem wannenrandseitigen Ende der Halterung (1) angeordnet ist.

7. Halterung (1) nach einem der Ansprüche 4 bis 6, wobei die Feststell- und Freigabeeinrichtung (27) einen Rastmechanismus (39) aufweist, der die Feststell- und Freigabeeinrichtung (27) in dem Sperrzustand insbesondere durch formschlüssiges und/oder kraftschlüssiges Einrasten festhält, wobei insbesondere der Rastmechanismus (39) derart ausgelegt ist, dass die Feststell- und Freigabeeinrichtung (27) beim Einnehmen der Verstau- und der Sitzposition automatisch in den Sperrzustand übergeht.

8. Halterung (1) nach Anspruch 7, wobei der Rastmechanismus (39) wenigstens ein Rastelement, wie einen Vorsprung und/oder eine Vertiefung, aufweist und die Halterung, insbesondere die Basis (23), an einer rückseitigen Seitenfläche wenigstens zwei dem wenigstens einen Rastelement zugeordnete Einrastelemente, wie Vorsprünge und/oder Vertiefungen, umfasst, wobei das wenigstens eine Rastelement dazu eingerichtet ist, in der Verstauposition und der Sitzposition in einen Eingriff mit je einem der Einrastelemente zu gelangen, um die Halterung (1) gegen ein Verschwenken festzuhalten, wobei insbesondere die Positionierung der wenigstens zwei Einrastelemente auf eine Schwenkbewegung der Halterung, insbesondere des wenigstens einen Rastelements der Feststell- und Freigabeeinrichtung (27), abgestimmt ist, wobei insbesondere ein kürzester Abstand der wenigstens zwei Einrastelemente zur Schwenkachse gleich groß ist.

9. Halterung (1) nach einem der Ansprüche 2 bis 8, wobei wenigstens eine Feder (47) sich derart an Boden (25) und Basis (23) abstützt, dass in der Verstauposition eine maximale Federkraft zwischen Boden (25) und Basis (23) aufgebaut ist und/oder die Federkraft beim Verschwenken des Bodens relativ zu der Basis (23) in Richtung der Sitzposition vorzugsweise kontinuierlich abnimmt, wobei insbesondere wenigstens eine Feder (47) dem Rastelement der Feststell- und Freigabeeinrichtung (27) eine Federkraft mitteilt, um das Rastelement in dem Verrastungseingriff mit dem Einrastelement vorzuspannen.

10. Halterung (1) nach einem der Ansprüche 4 bis 9, wobei die Feststell- und Freigabeeinrichtung (27) als Zieh- und/oder Druckhebel gebildet ist, der bei Betätigung, insbesondere Ziehen bzw. Drücken, zwischen Sperrzustand und Freigabezustand verbringbar ist.

11. Halterung (1) nach einem der vorstehenden Ansprüche, wobei die Befestigungseinrichtung wenigstens ein Rastelement, wie einen Vorsprung und/oder eine Vertiefung, aufweist, das dazu eingerichtet ist, mit einem Rastteil des Sitzes in einen, vorzugsweise formschlüssigen und/oder kraftschlüssigen, Eingriff zu gelangen, um den Sitz (3) an der Halterung (1) zu befestigen.

12. Halterung (1) nach einem der vorstehenden Ansprüche, wobei die Befestigungseinrichtung, insbesondere das wenigstens eine Rastelement, eine bezüglich des Sitzes vordefinierte Abmessung besitzt und/oder auf das vordefinierte Rastteil des Sitzes formabgestimmt ist.

13. Halterung (1) nach Anspruch 11 oder 12, wobei die Befestigungseinrichtung wenigstens zwei an dem Boden (25) vorgesehene Rastelemente aufweist, die quer, insbesondere senkrecht, zur Fahrzeuglängsrichtung in einem Abstand zueinander angeordnet und einem vordefinierten Rastteil-Paar des Sitzes zugeordnet sind.

14. Halterung (1) nach Anspruch 13, wobei die wenigstens zwei Rastelemente der Befestigungseinrichtung bezüglich des vordefinierten Rastteil-Paars des Sitzes formabgestimmt sind und/oder ein Abstand der zwei Rastelemente der Befestigungseinrichtung zueinander auf eine Rastteil-Paar-Abmessung, insbesondere Breite, abgestimmt sind.

15. KFZ umfassend:
- wenigstens einen rückseitigen Sitz (3), vorzugsweise einen sechsten oder siebten Sitz;
- einen rückseitigen Laderaum (5) mit einem wannenartigen Laderaumboden (7), dessen seitliche Wannenränder (9) in einen gemeinsamen Wannengrund (11) münden, auf dem ein Rollstuhl in dem Laderaum (5) verstaubar ist; und
- eine insbesondere nach einem der vorstehenden Ansprüche ausgebildete Halterung (1) zum Montieren des Sitzes in dem Laderaum (5), wobei die Halterung (1) eine an einem Wannenrand (9) befestigte Basis (23) und einen schwenkbar mit der Basis (23) gekoppelten Boden (25) aufweist, sich in einer geneigten, insbesondere horizontalen, Sitzposition, in der der Sitz (3) an der Halterung (1) befestigbar ist, brückenartig wenigstens teilweise über den Wannengrund (11) erstreckt und in einer aufrechten, insbesondere vertikalen, Verstauposition den Laderaum (5) freigibt, um ein Verstauen eines Rollstuhls in dem Laderaum (5) zu ermöglichen.
